# EUROPEAN PATENT APPLICATION

(11) **EP 2 749 908 A1**
(43) Date of publication of application: **02.07.2014**
(21) Application number: 12306706.8
(22) Date of filing: 28.12.2012
(51) Int. Cl.: G01V 1/50, E21B 47/00, G01V 3/18

(54) **Enhanced Visualization of Logging Information in Cased Wells Using Dynamic Normalization**

(71) Applicant: Services Pétroliers Schlumberger, 75007 Paris (FR); SCHLUMBERGER TECHNOLOGY B.V., 2514 JG The Hague (NL); Schlumberger Holdings Limited, Tortola 1110 (VG); PRAD Research and Development Limited, Road Town, Tortola 1110 (VG)
(72) Inventor: Kalyanaraman, Ram Sunder, 92142 Clamart Cedex (FR); Laronga, Robert, 92142 Clamart Cedex (FR)
(74) Representative: Rzaniak, Martin

(57) **Abstract**

Systems and methods for enhancing local heterogeneity of cased-hole well logging information are provided. An example of such a cased-hole well logging system may include a downhole tool and data processing circuitry. The downhole tool may obtain cased-hole logging information over a depth of a cased wellbore. The data processing circuitry may normalize at least some of the cased-hole logging information over at least a first subsection of the depth and may map visualization indicators to the normalized cased-hole logging information. The mapping of the visualization indicators to the normalized cased-hole logging information may enable an analyst to identify casing and/or annulus material properties not readily apparent using exclusively absolute visualizations of the cased-hole logging information.

## Description

### BACKGROUND

This disclosure relates to visualizing logging data obtained from cased wells and, more particularly, to dynamically normalizing the logging data to enhance heterogeneous image information of the casing and/or the annulus material behind casing in a cased wellbore.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions.

Water wells, waste disposal wells, nuclear waste and hazardous chemical disposal wells, CO₂ sequestration wells, oil and/or gas production wells, injection wells, and many other types of wells are supported by pipe-also referred to as casing-that has been cemented in place within the well. The placement of cement and its effectiveness as a barrier in the annulus behind casing serves to restrict the uncontrolled flow of formation fluids. As such, the ability of the cement to perform as an effective barrier may be understood and monitored. Over time, the casing may also become corroded. Corrosion may be extremely costly, depending on the scope of the damage and the purpose of the well. As such, the casing may be monitored to enable timely mitigation strategies to prevent leaks and other failures.

Many downhole tools have been developed to detect corrosion in well casing as well as evaluate cement placed behind the casing. Some of these corrosion evaluation tools may detect pipe corrosion based on the measurement of the internal diameter and/or wall thickness of a pipe in a well. Imaging tools may obtain an "image" of the casing by collecting logging information representing various types of measurements of the casing using the downhole tool. Downhole tools capable of obtaining this imaging information include ultrasonic tools, electromagnetic tools, and/or mechanical caliper tools. Likewise, many variants of technology exist in evaluating cement placed behind casing and range from sonic logging to ultrasonic imaging tools that provide an azimuthal image of cement placement behavior behind casing.

A human analyst may identify corrosion or defects in the annulus cement or other weaknesses in well casing by reviewing logging information converted into a well log visualization. In cased wells, the chief concern of the analyst has been a comparison of the absolute, or quantitative, differences in the logging information. As such, well log visualizations of logging information obtained from a cased well tend to map specific visualization indicators (e.g., colors) to particular values of the logging information. In this way, the absolute relationship between information obtained in one depth of the logging information can be easily compared to that from another depth even far away in the same well or in other wells. By comparing absolute values of the cased-hole logging information, absolute differences between the casing or cement behavior can be identified. The comparisons using absolute information may not, in certain cases, offer as much value when the logging information is confined within a narrow range of values (e.g., when the material in the annulus behind pipe-such as liquids or cement-have similar properties). As certain types of cement (e.g., ultra-light or foam cement) may have properties that appear more similar to fluids than typical solids as observed in the logging information, and which cannot easily be distinguished using standard cased-hole analyses.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Embodiments of this disclosure relate to identifying properties of casing and/or annulus material in cased wells by dynamically normalizing cased-hole logging information. In one example, a cased-hole well logging system may include a downhole tool and data processing circuitry. The downhole tool may obtain cased-hole logging information over a depth of a cased wellbore. The data processing circuitry may normalize at least some of the cased-hole logging information over at least a first subsection of the depth and may map visualization indicators to the normalized cased-hole logging information.

In a second example, non-transitory machine-readable media may include instructions to receive cased-hole logging information obtained by a downhole tool in a cased wellbore and to dynamically normalize the cased-hole logging information over a sliding depth window. The instructions further include instructions to map visualization indicators to the dynamically normalized cased-hole logging information to provide an enhanced visualization of local heterogeneity of the cased-hole logging information.

In a third example, a method may include obtaining cased-hole logging information using a downhole tool in a cased well and dynamically normalizing the cased-hole logging information in a data processing system. The method also may include mapping the dynamically normalized cased-hole logging information to a range of colors using the data processing system, producing a dynamically normalized log visualization displayable on an electronic display.

Various refinements of the features noted above may exist in relation to various aspects of this disclosure. Further features may also be incorporated in these various aspects as well. These refinements and additional features may exist individually or in any combination. For instance, various features discussed below in relation to one or more of the illustrated embodiments may be incorporated into any of the above-described aspects of this disclosure alone or in any combination. The brief summary presented above is intended to familiarize the reader with certain aspects and contexts of embodiments of this disclosure without limitation to the claimed subject matter.

### BRIEF DESCRIPTION OF THE DRAWINGS

Various aspects of this disclosure may be better understood upon reading the following detailed description and upon reference to the drawings in which:

FIG. 1 is a schematic diagram of a logging system to obtain logging information in a cased well (cased-hole logging information), in accordance with an embodiment;

FIG. 2 is a flowchart of a method for visualizing the cased-hole logging information to identify heterogeneous features using dynamic normalization, in accordance with an embodiment;

FIG. 3 is a visualization of the cased-hole logging information in which the logging information is mapped to a fixed color scale, in accordance with an embodiment;

FIG. 4 is a visualization of the cased-hole logging information in which the logging information is normalized over an entire length of the well before being mapped a fixed color scale, in accordance with an embodiment; and

FIG. 5 is a visualization of the cased-hole logging information in which the logging information is dynamically normalized over a subsection of the well before being mapped to a color scale to enhance local heterogeneity of the cased-hole logging information, in accordance with an embodiment.

### DETAILED DESCRIPTION

One or more specific embodiments of the present disclosure will be described below. These described embodiments are examples of the presently disclosed techniques. Additionally, in an effort to provide a concise description of these embodiments, certain features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it may be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Embodiments of this disclosure relate to visualization techniques to identify problems in casing and/or an annular barrier through the dynamic normalization of cased-hole logging information. As mentioned above, cased wells are wells that have casing with an annulus barrier material such as cement in the annulus behind the casing. To identify and correct problems in the casing and/or annulus barrier, a downhole tool may log the well to obtain cased-hole logging information. The cased-hole logging information may be converted into a form that can be used by a human analyst to identify casing and/or annulus barrier problems. Primarily, analysts have visualized the cased-hole logging information through a mapping of the cased-hole logging information to a fixed range of visualization indicators (e.g., a fixed range of colors). This form of well log visualization provides an absolute comparison between different depths of the well or between similar wells. For example, a particular color of the visualization may always represent fluids, while another color may represent always solids. Identifying fluids and solids, as well as all values in between, has enabled analysts to identify problems with the annulus barrier such as cement.

The practice of cased-hole visualization, with its emphasis on absolute comparisons (e.g., between fluids and solids), stands in stark contrast to the practice used with open-hole image logging information obtained from non-cased wells for geological interpretation of formations penetrated by the well. Geologic Image log interpretation in non-cased wells tends to focus less on absolute relationships and more on relative relationships. As such, interpretation of open-hole image logging information tends to be based on the observation of visual textures and geometric patterns based on relative differences in the open-hole logging information. These relative differences may enable analysts to identify properties of the geological formation of the well, given that non-cased wells are not surrounded by casing. Visualizing the relative differences of open-hole logging information may involve dynamically normalizing the open-hole logging information over relatively small intervals. These intervals may be, in some examples, around 1 foot or so. Such visualizations of open-hole logging information thus tend to illustrate relative differences over relatively short depths, and thus cannot quantitatively differentiate between fluids and solids in the wellbore in the manner generally used for quantitative interpretation of cased-hole logging information.

As such, it has been believed that the dynamic normalization visualization techniques used in open-hole logging would not provide a benefit to visualizing cased-hole logging information. Indeed, open-hole well logging has used dynamic normalization to identify properties of the surrounding geological formation. Yet the geological formation may not be imaged by cased-hole logging information because the geological formation is hidden behind the casing of the cased well. Thus, using dynamic normalization to identify properties of the geological formation would be inapt to cased-hole logging information. Moreover, the dynamic normalization of the open-hole scenario, applied to cased hole logging information, may impede the identification of fluids and solids. That is, dynamic normalization blurs the distinction between visualizing fluids and solids quantitatively, the primary basis for identifying annulus barrier problems.

Despite these significant differences, this disclosure will provide-contrary to previous understanding-that dynamic normalization can be used with cased-hole logging information to identify certain casing and/or annulus properties. As noted above, quantitative visualizations of absolute differences between cased-hole logging information may not absolutely distinguish between fluids and certain very light annulus materials, such as ultra-light or foam cement. The quantitative visualization may also occasionally identify only fluids, and no solids (e.g., ultra-light cement), making it difficult to analyze problems with the annulus material. Performing dynamic normalization on the cased-hole logging information, however, may clarify the cased-hole logging information. For example, dynamic normalization may cause ultra-light or foam cement to become apparent in log visualizations, since the cement may be slightly more solid than other fluids in the cased-hole logging information. The fluid behavior shown through dynamic normalization may imply, for instance, that there is a fluid channel (e.g., a crack in the annulus solids) through which the fluid is moving. As will be discussed below, however, the dynamic normalization techniques for use with cased-hole logging information may be different from the dynamic normalization techniques used with open-hole logging information. Although dynamic normalization used with open-hole logging information may apply normalization over relatively small intervals (e.g., 1 foot or so), the dynamic normalization used with cased-hole logging information, in some cases, may apply normalization over an interval an order of magnitude larger (e.g., 5, 10, or 15 feet, and up to 100 feet or more).

The dynamic normalization techniques discussed below also differ from other techniques that have been developed to analyze cased wells. For example, a technique referred to as the Goodwin technique has investigated the minimum, maximum, and average values at different azimuths and plotted them as curves. Variations in the curves provided an indication of heterogeneity. Other techniques have analyzed statistics to identify whether a particular data point is "behaving" in a similar or different way from its neighborhood and, when the data point is deemed to be behaving differently, mapping that data point to a different color than otherwise. None of these techniques, however, retains the relative behavior of the cased-hole logging information in the way taught by the dynamic normalization of the cased-hole well logging information discussed below.

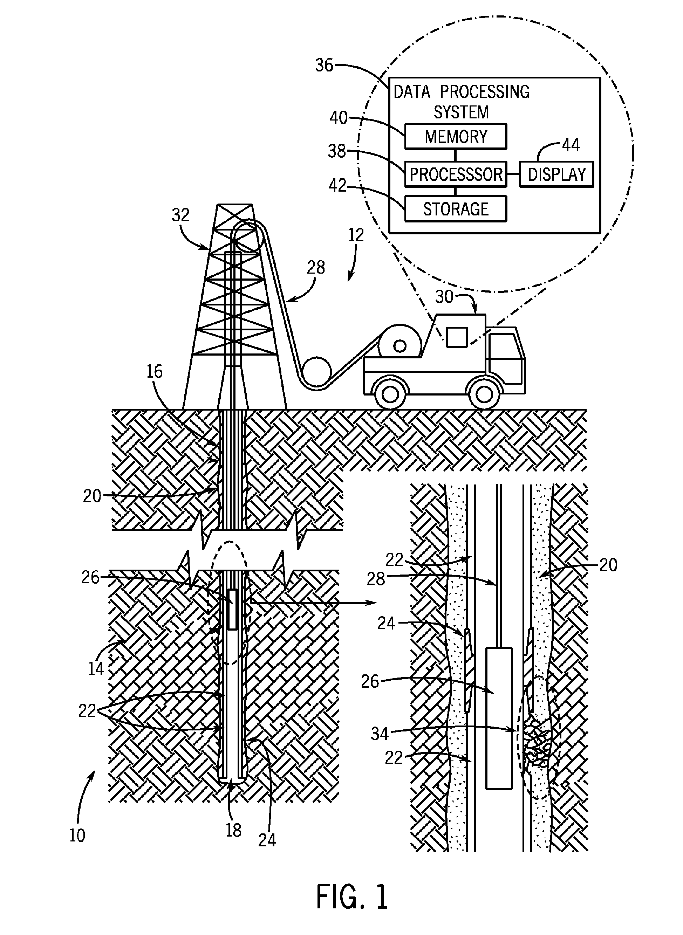

Keeping this in mind, FIG. 1 schematically illustrates a cased-hole well-logging system 10 to obtain to obtain and visualize cased-hole logging information using dynamic normalization. In particular, FIG. 1 illustrates surface equipment 12 above a geological formation 14. In the example of FIG. 1, a drilling operation has previously been carried out to drill a wellbore 16, to run a casing string 18, and to seal an annulus 20-the space between the wellbore 16 and the casing string 18-with cementing operations.

The casing string 18 may include several casing joints 22 (also referred to generally as casing 22 in the discussion below) that are coupled together by casing collars 24 to stabilize the wellbore 16. The casing joints 22 represent lengths of pipe, which may be formed from steel or similar materials. In one example, the casing joints 22 each may be approximately 13 m or 40 ft long, and may include an externally threaded (male thread form) connection at each end. A corresponding internally threaded (female thread form) connection in the casing collars 24 may connect two nearby casing joints 22. Coupled in this way, the casing joints 22 may be assembled to form the casing string 18 to a suitable length and specification for the wellbore 16. The casing joints 22 and/or collars 24 may be made of carbon steel, stainless steel, or other suitable materials to withstand a variety of forces, such as collapse, burst, and tensile failure, as well as chemically aggressive fluid. Nevertheless, in the harsh downhole environment of the wellbore 16, the casing joints 22 and collars 24 may still be subject to corrosion.

The surface equipment 12 may carry out various well logging operations to detect corrosion and other conditions. The well logging operations may measure parameters of the geological formation 14 (e.g., resistivity or porosity) and/or the wellbore 16 (e.g., temperature, pressure, fluid type, or fluid flowrate). Some measurements may obtained by a logging tool 26. In this disclosure, the logging tool 26 may obtain cased-hole logging information by performing any suitable measurements, such as sonic/ultrasonic measurements, electromagnetic measurements, or caliper measurements. Thus, the logging tool 26 may represent an sonic/ultrasonic tool, an electromagnetic tool, or an caliper tool, to name a few examples. Moreover, the example of FIG. 1 shows the logging tool 26 being conveyed through the wellbore 16 by a cable 28. Such a cable 28 may be a mechanical cable, an electrical cable, or an electro-optical cable that includes a fiber line protected against the harsh environment of the wellbore 16. In other examples, however, the logging tool 26 may be conveyed using any other suitable conveyance, such as coiled tubing or a borehole assembly (BHA) used for logging while drilling (LWD). The logging tool 26 may be deployed inside the wellbore 16 by the surface equipment 12, which may include a vehicle 30 and a deploying system such as a drilling rig 32.

FIG. 1 also schematically illustrates a magnified view of a portion of the cased wellbore 16. As mentioned above, the downhole tool 26 may obtain cased-hole logging information representing an image of the casing 22 and/or annulus 20 material from the point of view of the downhole tool 26. Certain variations in the absolute, or quantitative, values of the cased-hole logging information may indicate the occurrence of a corrosion zone 34 affecting the casing 22 and/or defects in the annulus 20 material affecting its ability to act as a barrier. As taught by this disclosure, however, the corrosion zone 34 and/or annulus 20 material defects may also become apparent by dynamically normalizing the cased-hole logging information obtained by the downhole tool 26. Dynamically normalizing the cased-hole logging information may reduce the distinctions in absolute or quantitative ways, but may enhance the relative, or qualitative, distinctions in the cased-hole logging information. As will be discussed below, these relative or qualitative distinctions in the cased-hole logging information may enable the identification of ultra-light or foam cement and/or fluid channels (e.g., cracks in the annulus 20 solids) through which fluid may be flowing. When the downhole tool 26 provides the cased-hole logging information to the surface equipment 12 (e.g., through the cable 28), an analyst at the surface equipment 12 may ascertain the location of the corrosion zone 34 and/or annulus 20 material defect. Based on the detection of the corrosion zone 34 and/or annulus 20 material defect, the surface equipment 12 may run another downhole tool into the wellbore 16 to carry out an appropriate remedial treatment (e.g., chemical treatment, patch, or casing replacement) to consolidate the corroded casing joint 22 and/or remediate the annulus 20 through remedial squeeze cementing.

The cased-hole logging information obtained by the logging tool 26 may be transmitted to the surface equipment 12. In one example, the vehicle 30 may be fitted with a data processing system 36 that includes a processor 38, memory 40, storage 42, and/or a display 44. In other examples, the cased-hole logging information may be processed by a similar data processing system 36 at any other suitable location. The data processing system 36 may perform a visualization technique using the cased-hole logging information from the downhole tool 26 that provides not only an absolute comparison, but also a relative comparison of the cased-hole logging information. Namely, the processor 38, using instructions stored in the memory 40 and/or storage 42, may dynamically normalize at least some of the cased-hole logging information from the downhole tool 26. The memory 40 and/or the storage 42 of the data processing system 36 may be any suitable article of manufacture that can store the instructions. The memory 40 and/or the storage 42 may be read-only memory (ROM), random-access memory (RAM), flash memory, an optical storage medium, or a hard disk drive, to name a few examples. The display 44 may be any suitable electronic display that can display a visualization of the cased-hole logging information from the downhole tool 26.

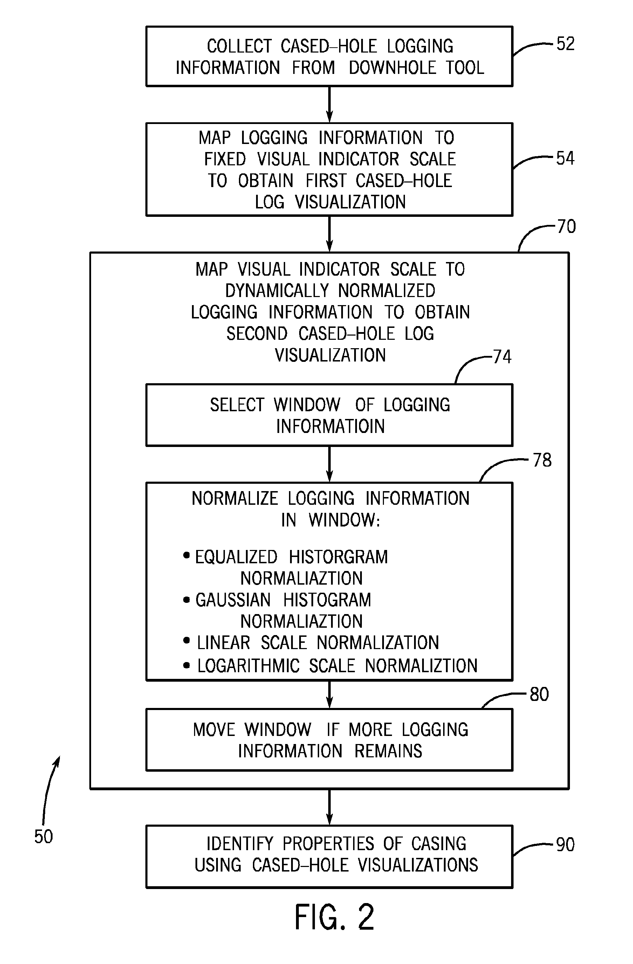

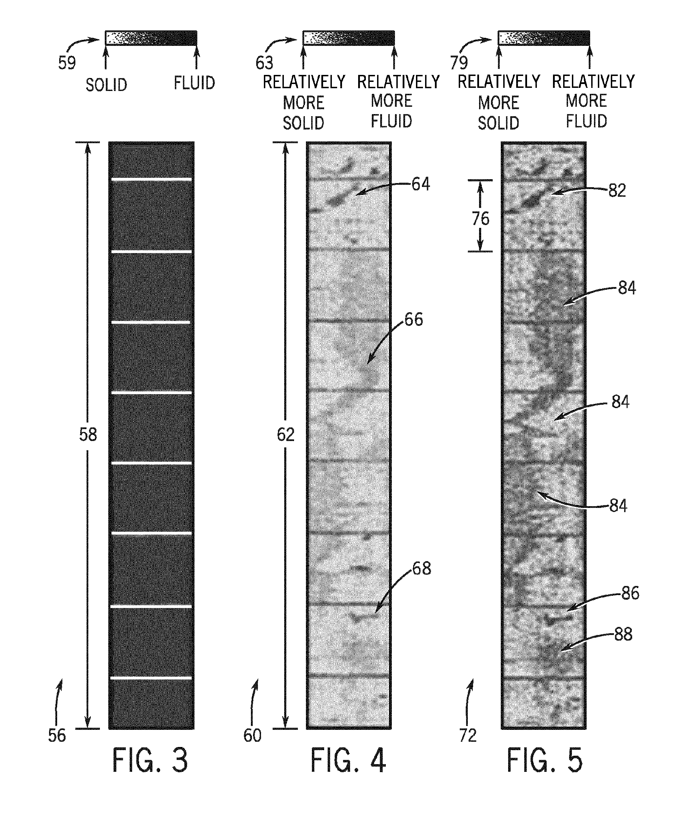

The cased-hole logging information may be used to identify properties of the casing 22 and/or annulus 20 material as shown in a flowchart 50 of FIG. 2. The flowchart 50 will be described in tandem with a discussion of FIGS. 3, 4, and 5, which respectively represent different visualizations of cased-hole logging information obtained from the downhole tool 26. To identify properties of the casing 22 and/or annulus 20 material,cased-hole logging information may be collected from the downhole tool 26 (block 52 of FIG. 2). The cased-hole logging information from the downhole tool 26 may be processed by the data processing system 36 to obtain well log visualizations. The well log visualizations may enable analysts to identify casing and/or annulus 20 material properties from the cased-hole logging information.

In one example, the data processing system 36 may map the cased-hole logging information to a fixed scale of visual indicators (e.g., colors or shapes) to obtain a first cased-hole log visualization (block 54 of FIG. 2). Such a first cased-hole log visualization may be an absolute log visualization 56, an example of which is illustrated in FIG. 3. The absolute log visualization 56 shown in FIG. 3 includes a fixed scale of visual indicators applied over the entire length 58 of depths of the wellbore 16. As shown in a legend 59, the visual indicators are colors in the illustrated example, but the visual indicators may be shapes in other examples. In the legend 59, lighter colors (e.g., white in a gray scale or yellow in a color scale) may correspond absolutely to solid elements detected by the cased-hole logging information. Darker colors (e.g., black in a gray scale or deep violet in a color scale) may correspond absolutely to fluids detected by the cased-hole logging information. Here, the absolute log visualization 56 is mostly dark, thereby indicating that the cased-hole logging information contains substantially only fluids or fluid-like materials. As such, the absolute log visualization 56 may provide little guidance to an analyst aiming to identify problems with the annulus 20 material, which is solid. In other words, an analyst relying exclusively on the absolute log visualization 56 shown in FIG. 3 might not be able to identify the properties of the and/or annulus 20 material.

Applying some normalization to the cased-hole logging information may cause the cased-hole logging information to provide better guidance to identifying the casing and/or annulus 20 material properties. Specifically, another example of a log visualization that may be obtained at block 54 of FIG. 2 may be a normalized log visualization 60 as shown in FIG. 4. The normalized log visualization 60 of FIG. 4 represents a visualization of the same cased-hole logging information used in the absolute log visualization 56 of FIG. 3. In the example of the normalized log visualization 60 of FIG. 4, however, the cased-hole logging information is normalized over the entire depth of the well 62. Since the cased-hole logging information has been normalized, the normalized log visualization 60 does not provide an absolute indication of the materials detected by the downhole tool 26 as in the absolute log visualization 56 of FIG. 3. Indeed, as illustrated by a legend 63, the visual indicators used in the normalized log visualization 60 may not absolutely represent solids and fluids. Rather, as seen in a legend 63, a lighter color (e.g., white in a gray scale or yellow in a color scale) may represent components of the cased-hole logging information that are relatively more solid in relation to the entirety of the wellbore 16, while colors that are darker (e.g., black in a gray scale or deep violet in a color scale) may represent components of the cased-hole logging information that are relatively more fluid in relation to the entirety of the wellbore 16 annulus 20.

Normalizing over the entirety of the cased-hole logging information may produce certain artifacts 64, 66, and 68, for example, which may represent features in the wellbore 16 annulus 20 material not apparent using an exclusively absolute mapping as in the absolute log visualization 56 of FIG. 3. Indeed, the normalized log visualization 60 of FIG. 4 may distinguish between relatively more solid and more fluid materials detected by the downhole tool 26. Thus, for example, artifacts 64 and 68 may represent materials in the annulus 20 that are relatively more fluid in comparison to the rest of the cased-hole logging information obtained over the complete depth of the wellbore 16 annulus 20. Since the artifacts 64 and 68 are approximately the same color, having an approximately equally dark color, these two artifacts 64 and 68 may be understood to represent the same degree of fluidity because the cased-hole logging information has been normalized across the entire depth 62 of the wellbore 16. The artifact 66 is faintly apparent, representing a difference between the degree of fluidity of different parts of the cased-hole logging information of the annulus 20.

Returning to the flowchart 50 of FIG. 2, the data processing system 36 may also obtain a visualization that emphasizes local differences in the cased-hole logging information. Namely, the data processing system 36 may map the visual indicator scale to dynamically normalized cased-hole logging information to obtain a second (or third) cased-hole log visualization (block 70 of FIG. 2). One example of such a dynamically normalized log visualization 72 appears in FIG. 5. The dynamically normalized log visualization 72 of FIG. 5 is obtained using the same cased-hole logging information used to generate the absolute log visualization 56 of FIG. 3 and the normalized log visualization 60 of FIG. 4.

To obtain the dynamically normalized log visualization 72 of FIG. 5, the data processing system 36 may select a window of the logging information of a first depth range (block 74 of FIG. 2). An example of such a window is represented by a depth window 76 in FIG. 5. The size of the depth window 76 used by the data processing system 36 may substantially larger, in some embodiments, than a window size used in an open-hole dynamic normalization. For example, the depth window 76 may be selected to be 5 feet, 10 feet, 15 feet, or up to 100 feet or more. In some cases, the depth window 76 may be one to two orders of magnitude larger than the 1 foot or so used in open-hole dynamic normalization. In other embodiments, the depth window 76 may be any suitable depth, including those larger or smaller than 5-15 feet (e.g., 100 feet or more). The data processing system 36 may normalize the cased-hole logging information over the depth window 76 using any suitable normalization scheme, applying the visual indicator scale to the normalized cased-hole logging information (block 78 of FIG. 2). As shown by a legend 79 in FIG. 5, the visual indicators may represent a lighter color (e.g., white in gray scale or yellow in a color scale) for more relatively more solid components (in the annulus 20) and may represent a darker color (e.g., black in a gray scale or deep violet in a color scale) for relatively more fluid components (in the annulus 20) of the cased-hole logging information within the depth window 76.

As mentioned above, the data processing system 36 may employ any suitable normalization technique. In one example, as indicated at block 78 of FIG. 2, the normalization technique may be an equalized histogram normalization scheme. With equalized historgram normalization, the boundaries of a histogram of all of the cased-hole logging information for the depth window 76 are computed in a manner to keep the number of elements in each bin constant. The number of bins of histogram points may be equal to the number of individual visual indicators (e.g., the number of individual colors) of the visual indicator scale.

In another example, the dynamic normalization may take place using Gaussian histogram normalization. Using Gaussian histogram normalization, the mapping of the visual indicators may follow a normal probability density. Thus, the mean value and standard deviation of the cased-hole logging information may be calculated and assigned to bins in this way (e.g., a Box-Cox method). Each of the bins of Gaussian-normalized cased-hole logging information corresponds to one of the visual indicators (e.g., one color).

In another example, the dynamic normalization may involve linear normalization according to a linear scale. Normalizing using a linear scale may provide a linear, equal mapping of the visual indicators to the range of cased-hole logging information represented within the depth window 76. According to the linear scale normalization scheme, each visual indicator corresponds to a particular sub-range linearly distributed between the maximum and minimum values of the cased-hole logging information found within the depth window 76.

In still another example, the visual indicators may be mapped to the cased-hole logging information of the depth window 76 according to a logarithmic scale. Specifically, the data processing system 36 may select a logarithmic mapping scale and the low and high data boundaries of the cased-hole logging information within the depth window 76. Thereafter, the visual indicators (e.g., colors) may be distributed logarithmically throughout the available cased-hole logging information of the depth window 76.

It should be appreciated that these normalization schemes are provided by way of example, and are not intended to be exhaustive. Indeed, any other suitable manipulation of the cased-hole logging information within the depth window 76 may be employed to enhance the relative, rather than absolute, differences between the cased-hole logging information in the depth window 76.

After mapping the dynamically normalized visual indicator scale to the cased-hole logging information within the depth window 76, the depth window 76 may be moved to another position (e.g., as a sliding window) if more logging information remains (block 80 of FIG. 2). In this way, the entire dynamically normalized log visualization 72 may be generated.

The dynamically normalized log visualization 72 of FIG. 5 may accentuate local differences in the cased-hole logging information. Thus, for example, an artifact 82, which may correspond to the artifact 64 shown in FIG. 4, may be even more clearly apparent in relation to other nearby structures that appear lighter in color. The artifact 82 thus may be understood to correspond to materials that are more fluid and less solid than other local cased-hole logging information of the annulus 20.

An artifact 84 of the dynamically normalized log visualization 72 of FIG. 5 corresponds to the artifact 66 of the normalized log visualization 60 of FIG. 4. In contrast to the artifact 66, however, the artifact 84 is much more clearly visible. It should be noted, however, that because the artifact 84 results from dynamic normalization, the artifact 84 cannot be directly compared to other remote artifacts. Indeed, an artifact 86 appears to have the same color as an artifact 88. However, the artifact 88 and the artifact 86 may in fact be may have different characteristics and may not be directly compared in the dynamically normalized log visualization 72.

Using the absolute log visualization 56, the normalized log visualization 60, and/or the dynamically normalized log visualization 72, an analyst may identify properties of the casing 22 and/or annulus 20 material of the wellbore 16 (block 90 of FIG. 2). For instance, relative relationships within the cased-hole logging information, as indicated by the dynamically normalized log visualization 72 of FIG. 5, may provide information relating to the casing 22 and/or annulus 20 material that might not otherwise have been apparent using exclusively the absolute log visualization 56 of FIG. 3 or the normalized log visualization 60 of FIG. 4. For instance, the artifacts 82 and 86 may suggest a fracture or fluid-filled texture within an ultra-light or foam cement of the annulus 20 behind the casing 22. Relying exclusively on the absolute log visualization 56 of FIG. 3, however, the analyst might only observe the presence of fluid in the same area of the cased-hole logging information. In another example, the artifact of 84 of the dynamically normalized log visualization 72 may represent any area of a wider channel containing fluid than its local surroundings. This may imply that fluid could move through this channel in the annulus 20 behind the casing 22. In contrast, looking exclusively at the absolute log visualization 56 of FIG. 3, the analyst may only observe the presence of fluid throughout the entirety of the cased-hole logging information at the same depths. Thus, using the dynamically normalized log visualization 72 of FIG. 5, the analyst may identify the patterns in different places in the annulus 20, which may imply the presence of channels containing fluids and a failure of local isolation. In this way, although previously it has been believed that only absolute relationships between values of cased-hole logging information could enable meaningful analysis of the casing 22 and/or annulus 20 material, it is now believed that dynamically normalized log visualizations of the cased-hole logging information may enable solid structures to be identified or inferred, even when substantially only fluid has been measured in such cased-hole logging information.

The specific embodiments described above have been shown by way of example, and it should be understood that these embodiments may be susceptible to various modifications and alternative forms. It should be further understood that the claims are not intended to be limited to the particular forms disclosed, but rather to cover modifications, equivalents, and alternatives falling within the spirit and scope of this disclosure.

## Claims

1. A cased-hole well logging system comprising:
a downhole tool configured to obtain cased-hole logging information over a depth of a cased wellbore; and
data processing circuitry configured to normalize at least some of the cased-hole logging information over at least a first subsection of the depth and to map a plurality of visualization indicators to the normalized cased-hole logging information.

2. The system of claim 1, wherein the downhole tool comprises a sonic/ultrasonic tool.

3. The system of claim 1, wherein the downhole tool comprises an electromagnetic /caliper tool.

4. The system of claim 1, wherein the data processing circuitry is configured to normalize at least some of the logging information by dynamically normalizing the logging information over the first subsection of the depth in a sliding depth window, wherein the sliding depth window is greater than 5 feet.

5. The system of claim 1, wherein the data processing circuitry is configured to normalize at least some of the logging information by dynamically normalizing the logging information over the first subsection of the depth in a sliding depth window, wherein the sliding depth window is approximately one order of magnitude greater than the average sliding depth window used in visualizations of open-hole logging information.

6. The system of claim 1, wherein the data processing circuitry is configured to normalize at least some of the logging information by dynamically normalizing the logging information over the first subsection of the depth in a sliding depth window, wherein the sliding depth window is greater than 10 feet.

7. The system of claim 1, wherein the data processing circuitry is configured to normalize at least some of the logging information by dynamically normalizing the logging information over the first subsection of the depth in a sliding depth window, wherein the sliding depth window is 15 feet or greater.

8. One or more non-transitory machine-readable media comprising instructions to:
receive cased-hole logging information obtained by a downhole tool in a cased wellbore;
dynamically normalize the cased-hole logging information over a sliding depth window; and
map a plurality of visualization indicators to the dynamically normalized cased-hole logging information to provide an enhanced visualization of local heterogeneity of the cased-hole logging information.

9. The one or more machine-readable media of claim 8, wherein the instructions to dynamically normalize the cased-hole logging information comprise instructions to perform an equalized histogram normalization over the sliding depth window.

10. The one or more machine-readable media of claim 8, wherein the instructions to dynamically normalize the cased-hole logging information comprise instructions to perform a Gaussian histogram normalization over the sliding depth window.

11. The one or more machine-readable media of claim 8, wherein the instructions to dynamically normalize the cased-hole logging information comprise instructions to perform a linear scale normalization over the sliding depth window.

12. The one or more machine-readable media of claim 8, wherein the instructions to dynamically normalize the cased-hole logging information comprise instructions to perform a logarithmic scale normalization over the sliding depth window.

13. The one or more machine-readable media of claim 8, wherein the sliding depth window comprises a sliding window of a depth of between approximately 5 feet and 15 feet.

14. The one or more machine-readable media of claim 8, wherein the plurality of visual indicators comprises a range of colors.

15. The one or more machine-readable media of claim 8, wherein the plurality of visual indicators comprises a plurality of shapes.
